# EUROPÄISCHE PATENTSCHRIFT

(11) **EP 3 819 168 B1**
(45) Veröffentlichungstag und Bekanntmachung des Hinweises auf die Patenterteilung: **23.03.2022**
(21) Anmeldenummer: 20200932.0
(22) Anmeldetag: 09.10.2020
(51) Int. Cl.: B60P 1/64

(54) **MOBILER KLAPPRAHMEN FÜR EIN TRANSPORTFAHRZEUG SOWIE MOBILE PRESSENANORDNUNG MIT EINEM DERARTIGEN KLAPPRAHME**
MOBILE FOLDING FRAME FOR A TRANSPORT VEHICLE AND MOBILE PRESS ARRANGEMENT WITH SUCH A FOLDING FRAME
CADRE PLIANT MOBILE POUR UN VÉHICULE DE TRANSPORT AINSI QUE AGENCEMENT DE PRESSAGE MOBILE DOTÉ D'UN TEL CADRE PLIANT

(30) Priorität: 07.11.2019 DE 102019217175
(43) Veröffentlichungstag der Anmeldung: 12.05.2021
(73) Patentinhaber: Max Aicher GmbH & Co. KG, 83395 Freilassing (DE)
(72) Erfinder: Finke, Olaf, 01906 Burkau (DE)
(74) Vertreter: Rau, Schneck & Hübner Patentanwälte Rechtsanwälte PartGmbB

(56) Entgegenhaltungen:
- EP-A1- 0 618 105
- DE-A1- 19 513 684
- DE-A1-102016 213 397
- DE-U1-202014 102 441
- DE-U1-202015 003 935
- DE-U1-202018 105 235
- US-A1- 2012 074 012

## Beschreibung

Die Erfindung betrifft einen mobilen Klapprahmen für ein Transportfahrzeug sowie eine mobile Pressenanordnung mit einem derartigen Klapprahmen.

DE 20 2014 102 441 U1 offenbart eine mobile Umladestation für verpressbare Güter. Eine Presse ist mittels eines Transportfahrzeugs mobil ausgeführt und kann mit einem mobil ausgeführten Container gekoppelt werden. Wenn die Presse an einem Einsatzort angestellt wird, verbleibt das Transportfahrzeug an dem Einsatzort. Das Transportfahrzeug kann nicht für andere Zwecke eingesetzt werden.

Aus DE 10 2016 213 397 A1 ist ein Transportrahmen bekannt, auf dem eine mobile Presse und ein Container angeordnet werden können. Der Transportrahmen kann vorteilhaft mit einem Transportfahrzeug transportiert und am Einsatzort der Presse abgestellt werden. Damit bleibt das Transportfahrzeug während der Nutzung der Presse am Einsatzort verfügbar.

EP 0 618 105 A1 offenbart ein Transportfahrzeug.

DE 195 13 684 A1 offenbart einen abrollbaren Müllsammelaufbau mit abkoppelbarem Behälter.

Dokument US 2012/074012 A1 offenbart ein mobiler Klapprahmen für ein Transportfahrzeug gemäß dem Oberbegriff des Anspruchs 1.

DE 20 2018 105 235 U1 offenbart ein Transportfahrzeug für Rollbehälter.

DE 20 2015 003 935 U1 offenbart einen Abrollbehälter.

Der Erfindung liegt die Aufgabe zugrunde, die Nutzung einer mobilen Presse zu verbessern.

Diese Aufgabe ist durch einen mobilen Klapprahmen mit den im Anspruch 1 angegebenen Merkmalen sowie durch eine mobile Presseanordnung mit den im Anspruch 11 angegebenen Merkmalen gelöst.

Der Kern der Erfindung besteht darin, dass ein mobiler Klapprahmen zwischen einer Transportanordnung und einer Aufbauanordnung klappbar ausgeführt ist. Dazu weist der Klapprahmen ein erstes Rahmenelement und ein zweites Rahmenelement auf, die um eine Rahmenschwenkachse schwenkbar miteinander verbunden sind. Die Rahmenelemente sind insbesondere jeweils flächig und insbesondere rechteckförmig ausgeführt. In der Transportanordnung ist der Klapprahmen eingeklappt. Die Rahmenelemente sind in einer Seitenansicht L-förmig zueinander angeordnet. In der Transportanordnung sind die Rahmenelemente quer, insbesondere senkrecht, zueinander angeordnet. In der Transportanordnung ist der Klapprahmen mittels eines Transportfahrzeugs, insbesondere mittels eines LKW, transportierbar. Insbesondere entspricht der Klapprahmen in der Transportanordnung dem Transportrahmen gemäß DE 10 2016 213 397 A1.

In der Aufbauanordnung ist der Klapprahmen aufgeklappt, also flächig angeordnet. In der Aufbauanordnung sind die Rahmenelemente parallel zueinander angeordnet. Die Rahmenelemente bilden in der Aufbauanordnung eine gemeinsame, ebene Gesamtfläche. In der Aufbauanordnung sind die Rahmenelemente fluchtend zueinander angeordnet. In der Aufbauanordnung weist der Klapprahmen eine vergrößerte Aufsetzgesamtfläche auf. Die Nutzung des Klapprahmens für den Betrieb eines transportierbaren Aufbaus, insbesondere einer mobilen Presse und/oder eines mobilen Containers, ist verbessert. Insbesondere ist es möglich, größere Pressen und/oder größere Container gemeinsam auf dem Klapprahmen in der Aufbauanordnung aufzusetzen und abzustellen. Der Klapprahmen kann als Untergrund für die Anordnung der Presse und des Containers verwendet werden. Die Presse ist insbesondere eine Müllpresse.

Ein Klapprahmen gemäß Anspruch 2 gewährleistet einen unkomplizierten Transport. Der Klapprahmen kann als Abrollbehälter auf einem Transportfahrzeug transportiert werden. Insbesondere ist der Klapprahmen für den Transport von Absetzkippern gemäß DIN 30720 und/oder DIN 30722 ausgeführt.

Ein Klapprahmen gemäß Anspruch 3 ermöglicht ein definiertes Aufsetzen eines ersten transportierbaren Aufbaus. Der erste transportierbare Aufbau ist insbesondere ein Container zum Aufnehmen gepresster Güter aus einer Presse. Der transportierbare Aufbau ist insbesondere als Abrollbehälter gemäß DIN 30722 ausgeführt und kann Rollen aufweisen. Die Rollen ermöglichen beim Absetzen des Abrollbehälters ein Abrollen auf dem Untergrund.

Ein Klapprahmen gemäß Anspruch 4 vereinfacht das Aufsetzen des ersten transportierbaren Aufbaus. Bei dem Klapprahmen können die Rollen des Abrollbehälters des ersten transportierbaren Aufbaus auf jeweils einer ersten Laufbahn abrollen. Dadurch ist eine definierte und axial geführte Abrollbewegung sichergestellt.

Ein Klapprahmen gemäß Anspruch 5 oder 6 ermöglicht ein zuverlässiges und vereinfachtes Absetzen eines zweiten transportierbaren Aufbaus, insbesondere einer Presse, analog den Vorteilen der Ansprüche 3 und 4 für den ersten transportierbaren Aufbau.

Ein Klapprahmen gemäß Anspruch 7 vereinfacht die Handhabung des Klapprahmens beim Auf- und Absetzen auf das Transportfahrzeug.

Ein Klapprahmen gemäß Anspruch 8 gewährleistet eine robuste und stabile Schwenkbewegung der Rahmenelemente zueinander.

Ein Klapprahmen gemäß Anspruch 9 gewährleistet eine sichere Anordnung des Klapprahmens in der Transportanordnung. Insbesondere ist mindestens ein Arretiermittel, insbesondere mindestens zwei Arretiermittel und insbesondere mehr als zwei Arretiermittel vorgesehen. Das Arretiermittel ist geeignet, eine Zuglast aufzunehmen, um zu verhindern, dass sich die Rahmenelemente unbeabsichtigt aus der Transportanordnung in die Aufbauanordnung verlagern. Als Arretiermittel dient insbesondere eine Stange, eine Kette oder ein Seil. Vorteilhaft ist es, wenn das Arretiermittel auch Drucckräfte aufnehmen kann, wie dies beispielsweise bei einer Stange der Fall ist. Dadurch können die Rahmenelemente eindeutig in einer gewünschten Anordnung zueinander positioniert werden. Ein unbeabsichtigtes Verlagern der Rahmenelemente zueinander aus der Transportanordnung ist verhindert.

Ein Klapprahmen gemäß Anspruch 10 ermöglicht eine zuverlässige und definierte Befestigung der Presse am Klapprahmen, insbesondere an dem zweiten Rahmenelement. An den Rahmenelementen vorgesehene Befestigungslaschen können auch zur Befestigung des Arretiermittels genutzt werden.

Eine mobile Pressenanordnung gemäß Anspruch 11 weist die Vorteile des Klapprahmens auf, worauf hiermit verwiesen wird. Insbesondere weist die mobile Presseanordnung eine Presse in Form einer Müllpresse als zweiter transportierbarer Aufbau auf.

Eine Presseanordnung gemäß Anspruch 12 gewährleistet eine definierte Anordnung der Presse.

Eine Pressenanordnung gemäß Anspruch 13 weist eine erhöhte Sicherheit auf.

Eine Pressenanordnung gemäß Anspruch 14 ermöglicht eine vorteilhafte Nutzung, indem in der Presse gepresstes Gut unmittelbar in einen Container als transportierbaren Aufbau abgegeben werden kann.

Eine Pressenanordnung gemäß Anspruch 15 gewährleistet einen sicheren Betrieb. Ein unbeabsichtigtes Lösen des Containers von der Presse ist ausgeschlossen.

Sowohl die in den Patentansprüchen angegebenen Merkmale als auch die in der nachfolgenden Ausführungsform des erfindungsgemäßen Klapprahmens angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, Einzelheiten und Vorteile der Erfindung werden nachfolgend anhand der Beschreibung eines Ausführungsbeispiels gemäß der Zeichnung näher erläutert. In dieser zeigen:
- Fig. 1: eine perspektivische Ansicht eines erfindungsgemäßen mobilen Klapprahmens in einer Transportanordnung,
- Fig. 2: eine Seitenansicht des Klapprahmens in Fig. 1,
- Fig. 3: eine Fig. 1 entsprechende Ansicht des Klapprahmens in einer Aufbauanordnung,
- Fig. 4: eine perspektivische Darstellung einer mobilen Pressenanordnung mit dem Klapprahmen in der Aufbauanordnung gemäß Fig. 3 mit einer Presse und mit einem Container,
- Fig. 5: eine vergrößerte Detaildarstellung des Details V in Fig. 4,
- Fig. 6: eine Seitenansicht der Pressenanordnung gemäß Fig. 4,
- Fig. 7: eine vergrößerte Detailansicht des Details VII in Fig. 6,
- Fig. 8: eine Schnittdarstellung gemäß Schnittlinie VIII-VIII in Fig. 7.

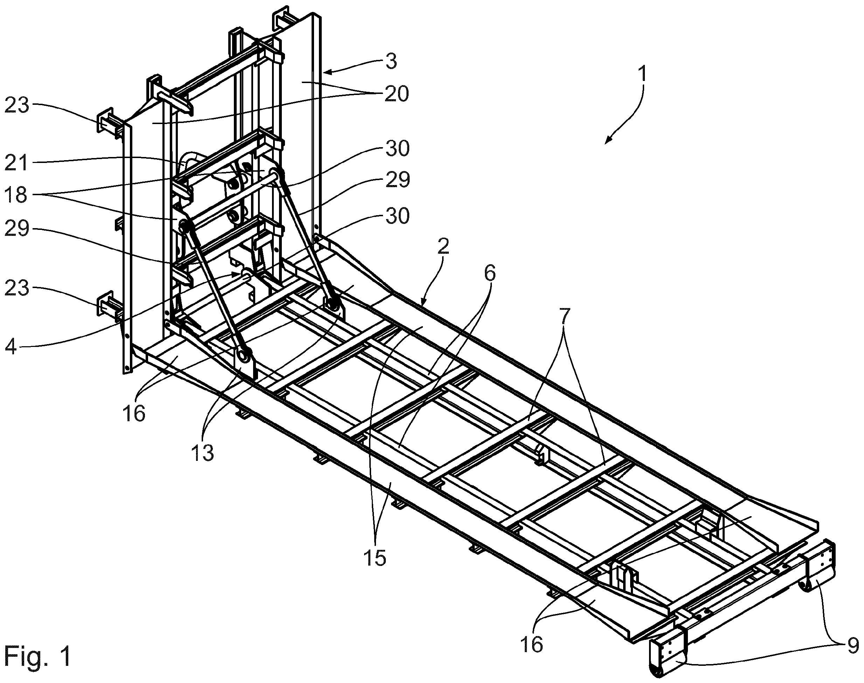

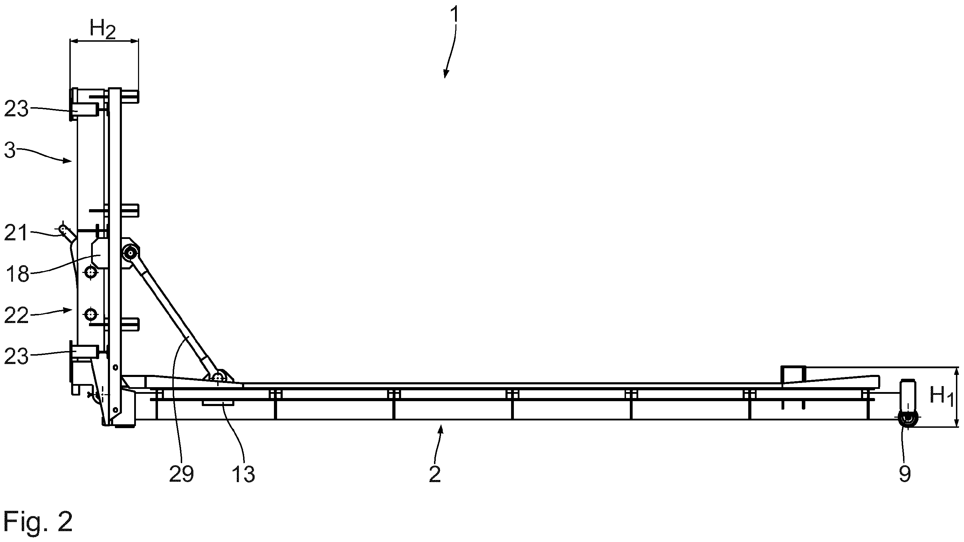

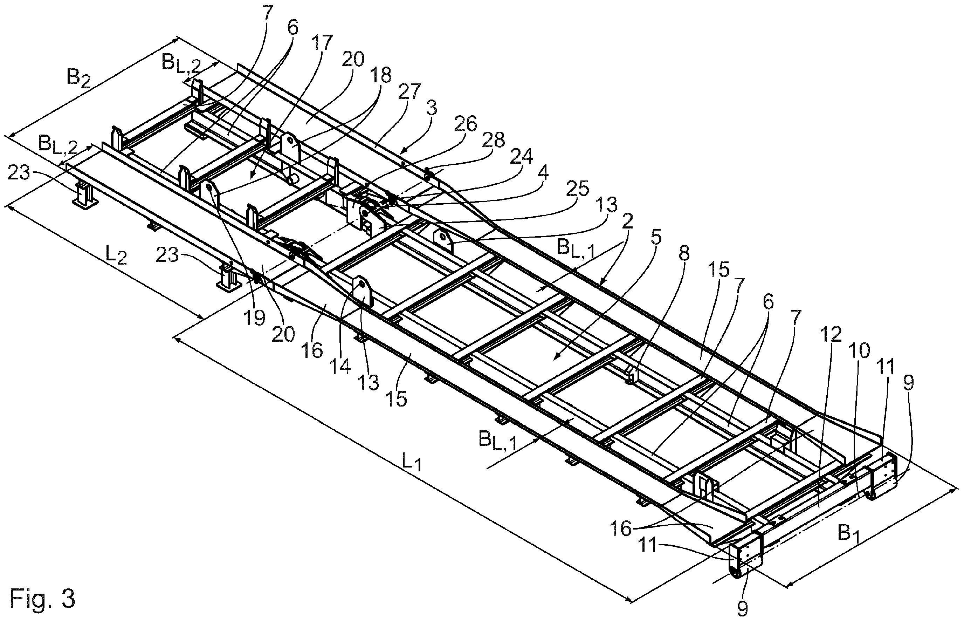

Ein in Fig. 1 bis 3 gezeigter mobiler Klapprahmen 1 weist ein erstes Rahmenelement 2 und ein zweites Rahmenelement 3 auf. Die beiden Rahmenelemente 2, 3 sind um eine Rahmenschwenkachse 4 schwenkbar miteinander verbunden. Der mobile Klapprahmen 1 kann zwischen einer in Fig. 1 und 2 gezeigten Transportanordnung und einer in Fig. 3 gezeigten Aufbauanordnung geklappt werden.

In der Transportanordnung sind die Rahmenelemente 2, 3 senkrecht zueinander angeordnet. Die Rahmenelemente 2, 3 sind in der Seitenansicht gemäß Fig. 2 L-förmig zueinander angeordnet. In der Transportanordnung ist der Klapprahmen 1 als Abrollbehälter gemäß DIN 30722 ausgeführt. Der Klapprahmen 1 ist in der Transportanordnung mittels eines Transportfahrzeugs, insbesondere mittels eines Transport-LKWs, unkompliziert transportierbar.

Das erste Rahmenelement 2 weist eine erste Länge L₁, eine erste Breite B₁ und eine erste Höhe H₁ auf. Die erste Länge L₁ und die erste Breite B₁ entsprechen den Maßen des Abrollbehälters gemäß DIN 30722. Die erste Länge L₁ und die erste Breite B₁ sind größer und insbesondere deutlich größer als die erste Höhe H₁. Das erste Rahmenelement 2 ist flächenhaft, also als Flächenelement, ausgeführt. Durch die erste Länge L₁ und die erste Breite B₁ ist das Flächenelement rechteckförmig ausgeführt. Insbesondere gilt: H₁ < L₁, B₁, insbesondere H₁ ≤ 0,2 · L₁, B₁, insbesondere H₁ ≤ 0,1 · L₁, B₁.

Das erste Rahmenelement 2 weist eine erste Rahmengrundstruktur 5 auf mit zwei Längsträgern 6 und mehreren, jeweils mit beiden Längsträgern 6 fest verbundenen Querträgern 7. Die Längsträger 6 sind mit den Querträgern 7 an den Kreuzungsstellen insbesondere verschweißt. Die Querträger 7 sind parallel zur Rahmenschwenkachse 4 orientiert. Die Längsträger 6 sind senkrecht zur Rahmenschwenkachse 4 orientiert. Die Querträger 7 sind jeweils paarweise parallel zueinander orientiert. Die Längsträger 6 sind parallel zueinander orientiert. Die erste Rahmengrundstruktur 5 bildet eine offene Fachwerkstruktur mit den senkrecht zueinander angeordneten Längsträgern 6 und Querträgern 7.

Die Längsträger 6 und die Querträger 7 sind jeweils als I-Stahlprofile ausgeführt.

An den einander zugewandten Innenseiten der Längsträger 6 sind Führungsklammern 8 angeordnet, die eine geführte Längsverlagerung des Klapprahmens 1 am Transportfahrzeug ermöglichen.

An einem der Rahmenschwenkachse 4 abgewandten Ende weist das erste Rahmenelement 2 zwei Laufrollen 9 auf, die jeweils um eine Laufrollendrehachse 10 drehbar gelagert sind. Die Laufrollen 9 sind jeweils in einer Laufrollenhalterung 11 aufgenommen. Die Laufrollenhalterungen 11 sind an einem Trägerelement, das an der ersten Rahmengrundstruktur 5 befestigt ist, angeordnet. Mittels der Laufrollen 9 kann der Klapprahmen 1 in der Transportanordnung wie ein Abrollbehälter gehandhabt werden. Der Klapprahmen 1 weist die Funktion eines Abrollbehälters auf.

Das erste Rahmenelement 2 weist zwei erste Befestigungslaschen 13 auf, die jeweils an einem Längsträger 6 befestigt sind. Die ersten Befestigungslaschen 13 weisen jeweils eine Durchgangsöffnung 14 auf. Die Durchgangsöffnungen 14 ragen an einer Oberseite der Längsträger 6 hervor. Die ersten Befestigungslaschen 13 sind insbesondere derart an dem ersten Rahmenelement 2 angebracht, dass die Durchgangsöffnungen 14 miteinander fluchten. Eine virtuelle Verbindungslinie zwischen den fluchtenden Durchgangsöffnungen 14 ist insbesondere parallel zur Rahmenschwenkachse 4 und insbesondere horizontal orientiert.

Das erste Rahmenelement 2 weist zwei erste Laufbahnen 15 auf. Die ersten Laufbahnen 15 bilden eine erste Aufsetzfläche für den Container. Die ersten Laufbahnen 15 erstrecken sich entlang der Längsrichtung des ersten Rahmenelements 2. Die ersten Laufbahnen 15 sind parallel zueinander und beabstandet zueinander angeordnet. Die ersten Laufbahnen 15 sind auf der ersten Rahmengrundstruktur 5, insbesondere auf den Querträgern 7, angeordnet und daran befestigt.

Die ersten Laufbahnen 15 weisen jeweils eine erste Laufbahnbreite B_{L,1} auf. Die ersten Laufbahnen 15 weisen jeweils endseitig einen Einlaufabschnitt 16 auf, der sich ausgehend von einer maximalen Laufbahnbreite zu der ersten Laufbahnbreite B_{L,1} verjüngt. Durch die Einlaufabschnitte 16 ist das Aufsetzen eines transportierbaren Aufbaus, insbesondere des Containers, auf die ersten Laufbahnen 15 vereinfacht.

Das zweite Rahmenelement 3 weist einen ähnlichen Aufbau wie das erste Rahmenelement 2 auf. Das zweite Rahmenelement 3 weist eine zweite Rahmengrundstruktur 17 auf, die durch zwei Längsträger 6 und drei Querträger 7 gebildet ist. Die Längsträger 6 und die Querträger 7 sind jeweils paarweise fest miteinander verbunden, insbesondere verschweißt.

Das zweite Rahmenelement 3 weist zweite Befestigungslaschen 18 auf. Die zweiten Befestigungslaschen 18 sind insbesondere identisch zu den ersten Befestigungslaschen 13 ausgeführt. Die zweiten Befestigungslaschen 18 weisen jeweils eine Durchgangsöffnung 19 auf. Die zweiten Befestigungslaschen 18 sind derart an dem zweiten Rahmenelement 3, insbesondere an der zweiten Rahmengrundstruktur 17, und insbesondere an den Längsträgern 6 angeordnet und befestigt, dass die Durchgangsöffnungen 19 miteinander fluchten. Eine virtuelle Verbindungslinie der fluchtenden Durchgangsöffnungen 19 ist parallel zu der Rahmenschwenkachse 4, insbesondere parallel zu der virtuellen Verbindungslinie der Durchgangsöffnungen 14 und insbesondere horizontal orientiert.

Das zweite Rahmenelement 3 weist zwei zweite Laufbahnen 20 auf. Die beiden zweiten Laufbahnen 20 bilden eine zweite Aufsetzfläche für den zweiten transportierbaren Aufbau, insbesondere die Presse. Die zweiten Laufbahnen 20 weisen jeweils eine zweite Laufbahnbreite B_{L,2} auf. Die zweite Laufbahnbreite B_{L,2} ist größer als die erste Laufbahnbreite B_{L,1}. Die zweite Laufbahnbreite B_{L,2} entspricht der aufgeweiteten Breite der ersten Laufbahn 15 am Ende des Einlaufabschnitts 16. Durch den Einlaufabschnitt 16 wird ein kontinuierlicher Übergang zwischen der ersten Laufbahnbreite B_{L,1} und der zweiten Laufbahnbreite B_{L,2} hergestellt.

Jeweils eine erste Laufbahn 15 und eine zweite Laufbahn 20 sind in der Aufbauanordnung gemäß Fig. 3 fluchtend zueinander angeordnet. Die erste Laufbahn 15 und die zweite Laufbahn 20 bilden eine gemeinsame Laufbahn. Insbesondere sind die erste Laufbahn 15 und die zweite Laufbahn 20 in einer Ebene angeordnet. Insbesondere sind jeweils die beiden ersten Laufbahnen 15 und die beiden zweiten Laufbahnen 20 in einer gemeinsamen Ebene angeordnet.

An einer den zweiten Laufbahnen 20 abgewandten Unterseite des zweiten Rahmenelements 3, insbesondere an einer Unterseite der zweiten Rahmengrundstruktur 17, ist an dem zweiten Rahmenelement 3 eine Hakenliftlasche 21 angeordnet. In der Transportanordnung dient die Hakenliftlasche 21 zum Greifen mittels eines Kranhakens des Transportfahrzeugs. Die Handhabung des mobilen Klapprahmens 1 in der Transportanordnung ist dadurch vereinfacht. Die Hakenliftlasche 21 ist insbesondere abklappbar ausgeführt. Dadurch ist gewährleistet, dass die Hakenliftlasche 21 die Verwendung des Klapprahmens 1 in der Aufbauanordnung nicht beeinträchtigt. Insbesondere wird die Hakenliftlasche 21 in der Aufbauanordnung des Klapprahmens 1 nicht beschädigt und insbesondere nicht zerstört.

Das zweite Rahmenelement 3 weist an seiner Unterseite 22 mehrere Abstützelemente 23 auf. Die Abstützelemente 23 sind gemäß dem gezeigten Ausführungsbeispiel als Stützfüße ausgeführt. Es sind auch andere Ausführungen für die Abstützelemente 23 möglich, insbesondere Stützrollen. Insbesondere können die Abstützelemente 23 individuell höhenverstellbar ausgeführt sein, um einen Höhenunterschied des Untergrunds, auf dem der Klapprahmen 1 abgestellt wird, auszugleichen.

Die Rahmenschwenkachse 4 ist durch ein Laschen-Drehgelenk 24 festgelegt. An den Längsträgern 6 der ersten Rahmengrundstruktur 5 ist jeweils ein gabelförmiges erstes Laschenelement 25 befestigt. Das erste Laschenelement 25 weist zwei beabstandet angeordnete Laschen mit LaschenDurchgangsöffnungen auf. In dem von den Laschen des ersten Laschenelements 25 gebildeten Zwischenraum ist ein zweites Laschenelement 26 angeordnet. Das zweite Laschenelement 26 weist eine Laschenelement-Durchgangsöffnung auf, die mit den Laschendurchgangsöffnungen des ersten Laschenelements 25 fluchtet. In die fluchtenden Durchgangsöffnungen ist ein Schwenkbolzen eingesetzt, der konzentrisch zur Rahmenschwenkachse 4 angeordnet ist.

In der Aufbauanordnung sind die Rahmenelemente 2, 3 im Wesentlichen parallel zu dem Untergrund, auf dem sie abgestellt sind, angeordnet. Insbesondere sind die Rahmenelemente 2, 3 horizontal orientiert.

In der Aufbauanordnung gemäß Fig. 3 sind die ersten Laufbahnen 15 und die zweiten Laufbahnen 20 an äußeren Bordwänden 27 mittels eines Fixier-Splints 28 miteinander fixiert.

Um den Klapprahmen 1 ausgehend von der Aufbauanordnung in Fig. 3 in die in Fig. 1 und 2 dargestellte Transportanordnung zu überführen, werden zunächst die Fixiersplinte 28 entfernt. Anschließend wird das zweite Rahmenelement 3 aus seiner horizontalen Anordnung gegenüber dem ersten Rahmenelement 1 um die Rahmenschwenkachse 4 geschwenkt. Insbesondere beträgt der Schwenkwinkel 90°. In der Transportanordnung des Klapprahmens 1 befindet sich das zweite Rahmenelement 3 in einer vertikalen Anordnung.

Für den Transport des Klapprahmens 1 kann das zweite Rahmenelement 3 an dem ersten Rahmenelement 2 mittels zwei Arretiermitteln 29 arretiert werden. Gemäß dem gezeigten Ausführungsbeispiel dienen als Arretiermittel 29 Arretierstangen, die endseitig jeweils an den Durchgangsöffnungen 14, 19 der Befestigungslaschen 13, 18 angebolzt sind.

Zur Seitenstabilisierung des Klapprahmens 1 in der Transportanordnung kann entlang der Rahmenschwenkachse 4 zwischen den Laschen-Drehgelenken 24 eine Querstützstange 30 eingesetzt sein. Eine weitere Querstützstange 30 kann zwischen den beiden zweiten Befestigungslaschen 18 an dem zweiten Rahmenelement 3 eingesetzt sein.

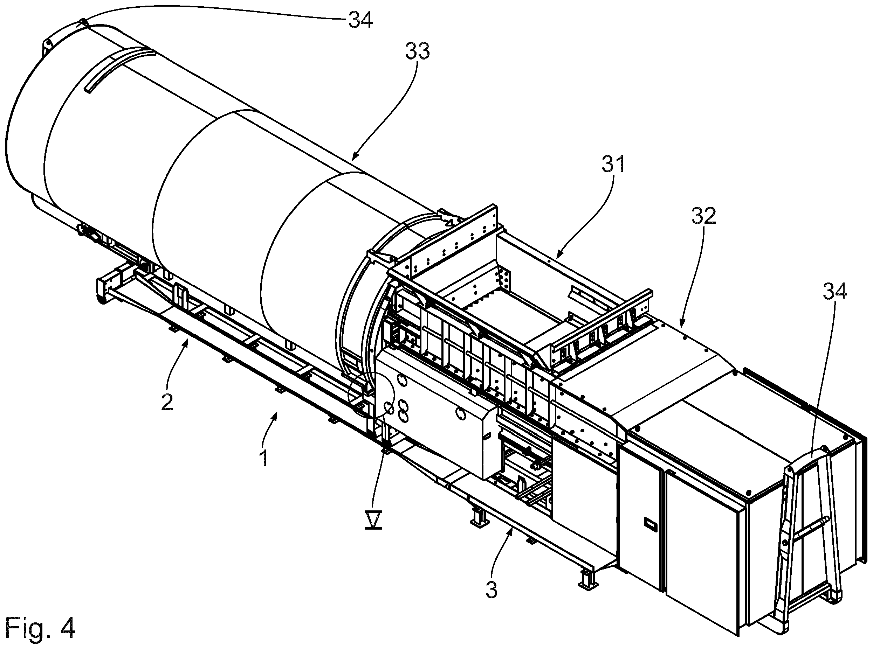

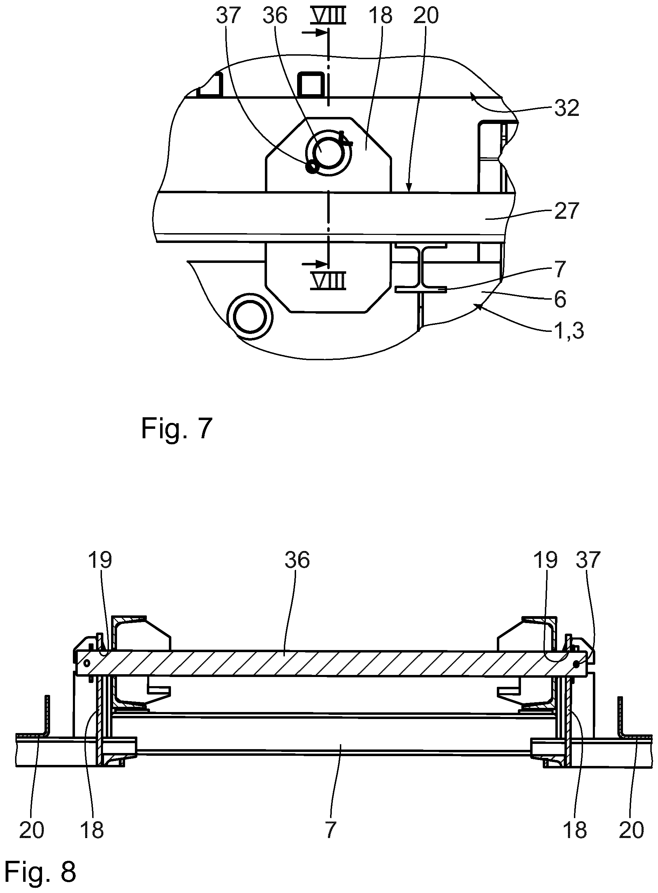

Nachfolgend wird anhand von Fig. 4 bis 8 der Aufbau und die Funktion einer mobilen Pressenanordnung näher erläutert.

Die mobile Pressenanordnung 31 umfasst den Klapprahmen 1, eine daran aufgesetzte Presse 32 und einen mit der Presse 32 gekoppelten Container 33. Die Presse 32 ist auf dem zweiten Rahmenelement 3 aufgesetzt. Der Container 33 ist auf dem ersten Rahmenelement 2 aufgesetzt.

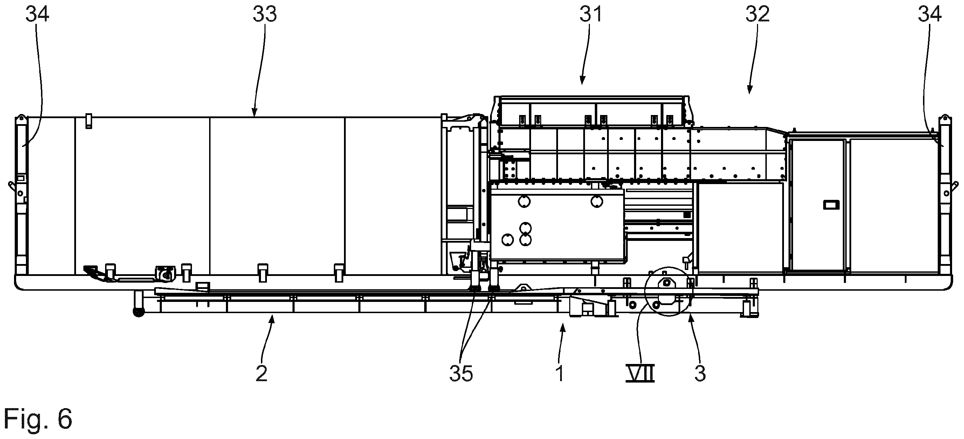

Die Presse 2 ist eine Müllpresse, ist als mobile Presse ausgeführt und auf einem mobilen Transportrahmen 34 gemäß der DE 10 2016 213 397 A1 angeordnet. Zum Herstellen der mobilen Pressenanordnung 31 gemäß Fig. 4 und 6 wird zunächst der Klapprahmen 1 mittels eines Transportfahrzeugs in der Transportanordnung gemäß Fig. 1 und 2 transportiert und von dem Transportfahrzeug abgesetzt.

Nachdem der Klapprahmen 1 abgesetzt worden ist, werden die Arretiermittel 29 entfernt und das zweite Rahmenelement 3 gegenüber dem ersten Rahmenelement 2 um 90° in die Aufbauanordnung gemäß Fig. 3 verschwenkt. Auf den Klapprahmen 1 in der Aufbauanordnung wird zunächst die Presse 32 aufgesetzt. Dadurch, dass die Presse 32 an dem Transportrahmen 34 angeordnet ist, kann die Presse mittels eines Transportfahrzeugs angeliefert und auf den Klapprahmen 1, insbesondere das zweite Rahmenelement 3, aufgesetzt werden. Vorteilhaft ist, dass die Laufrollen 35 des Transportrahmens 34 auf den zweiten Laufbahnen 20 abgerollt werden können.

Dadurch, dass die Presse 32 an dem Transportrahmen 34 angeordnet ist, bildet die Presse 32 mit dem Transportrahmen 34 eine kompakte und stabile Einheit. Die Presse 32 mit dem Transportrahmen 34 kann in Längsrichtung des Klapprahmens 1 an diesem überstehen. Die Stabilität der Presse 32, insbesondere der an dem Transportrahmen 34 angeordneten Komponenten und Aggregate, ist dadurch nicht beeinträchtigt.

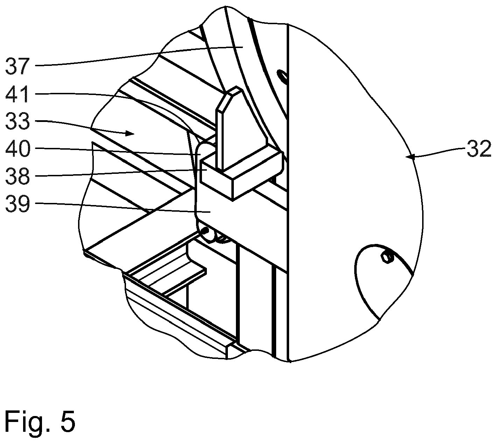

Nachdem die Presse 32 auf den Klapprahmen 1 aufgesetzt und daran befestigt worden ist, wird der Container 33 mit dem Transportrahmen 34, insbesondere mit den Laufrollen 35 des Transportrahmens 34, auf die ersten Laufbahnen 15 des ersten Rahmenelements 2 aufgesetzt und zur Presse 32 hin verschoben. Der Container 33 wird mit der Presse 32 gekoppelt. Die Kopplung der Presse 32 mit dem Container 33 ist in Fig. 5 näher dargestellt. An einem äußeren Gehäuse 37 des Containers 33 sind seitlich nach außen vorstehende Widerlager 38 vorgesehen. Insbesondere sind entlang des äußeren Umfangs des Gehäuses 37 mehrere Widerlager 38 vorgesehen.

Die Presse 32 ist an den zweiten Befestigungslaschen 18 mittels eines Querbolzens 36 an dem Klapprahmen 1, insbesondere dem zweiten Rahmenelement 3, befestigt. Der Querbolzen 36 ist durch die fluchtenden Durchgangsöffnungen 19 der zweiten Befestigungslaschen 18 geführt und steht jeweils stirnseitig an den zweiten Befestigungslaschen 18 vor. Der Querbolzen 36 weist jeweils in einem Endbereich eine Querbohrung auf, durch die jeweils ein Befestigungssplint 37 geführt ist, um ein unbeabsichtigtes Lösen des Querbolzens 36 zu verhindern. Die Befestigung der Presse 32 an dem Klapprahmen 1 ist stabil.

Die Presse 32 weist mehrere Kopplungshaken 39 auf, die insbesondere beweglich an der Presse 32 befestigt sind. Die Kopplungshaken 39 können insbesondere um eine horizontal orientierte Schwenkachse schwenkbar ausgeführt sein. Es ist auch denkbar, dass die Kopplungshaken 39 vertikal verlagerbar sind. Die Kopplungshaken 39 erstrecken sich im Wesentlichen entlang der Längsrichtung der Presse 32 und des Klapprahmens 1. Die Kopplungshaken 39 weisen einen Hakenabschnitt 40 zum Hintergreifen der Widerlager 38 auf. Zum Koppeln des Containers 33 an der Presse 32 werden die Kopplungshaken 39 in eine nicht dargestellte Entkopplungsposition verlagert, also insbesondere nach unten geschwenkt oder verlagert.

Der Container 33 wird dann in Längsrichtung an die Presse 32 heran gefahren. Wenn der Container 33 seine axiale Zielposition erreicht hat, werden die einzelnen Kopplungshaken 39 nach oben geschwenkt bzw. verlagert, so dass die Kopplungshaken 39 mit dem Hakenabschnitt 40 das jeweilige Widerlager 38 hintergreifen. In dieser, insbesondere in Fig. 5, gezeigten Anordnung ist der Container 33 sicher, aber lösbar mit der Presse 32 gekoppelt.

Es ist auch denkbar, dass die Verlagerung des Kopplungshakens 39 aus der Kopplungsanordnung gemäß Fig. 5 entgegen einer Federvorspannung erfolgt, wobei der Kopplungshaken 39 beim Annähern des Containers 33 an die Presse 32 durch das Widerlager 38 automatisch entgegen der Federvorspannung nach unten gedrückt wird und in Folge der Federvorspannung automatisch wieder nach oben gedrückt wird, sobald sich der Container 33 in der axialen Zielposition befindet und der Kopplungshaken 39 das Widerlager 38 hintergreifen kann. Dazu weist der Kopplungshaken 39, insbesondere der Hakenabschnitt 40, an einer der Presse 32 abgewandten Außenseite eine Abschrägung oder Abrundung 41 auf, um das automatische Nachunten-Verlagern beim Aufschieben des Containers 33 zu vereinfachen. An einer der Presse 32 zugewandten Innenfläche weist der Hakenabschnitt 40 eine insbesondere vertikal orientierte Anlagefläche auf. Mit der Anlagefläche liegt der Hakenabschnitt 40 an dem Widerlager 38 an. Ein unbeabsichtigtes Entkoppeln des Containers 33 von der Presse 32 ist verhindert.

## Patentansprüche

1. Mobiler Klapprahmen für ein Transportfahrzeug umfassend
a. ein erstes Rahmenelement (2),
b. ein an dem ersten Rahmenelement (2) um eine Rahmenschwenkachse (4) schwenkbar angelenktes zweites Rahmenelement (3),
wobei
der Klapprahmen (1) zwischen einer Transportanordnung, in der die Rahmenelemente (2, 3) quer zueinander angeordnet sind, und einer Aufbauanordnung, in der die Rahmenelemente (2, 3) parallel zueinander angeordnet sind, klappbar ist, **dadurch gekennzeichnet, dass** Z
die Rahmenelemente (2, 3) in der Aufbauanordnung eine gemeinsame, ebene Gesamtfläche bilden und fluchtend zueinander angeordnet sind, so dass der Klapprahmen (1) eine vergrößerte Aufsetzgesamtfläche aufweist.

2. Klapprahmen gemäß Anspruch 1, **dadurch gekennzeichnet, dass** der Klapprahmen (1) in der Transportanordnung als Abrollbehälter gemäß DIN 30722 ausgeführt ist.

3. Klapprahmen gemäß einem der vorstehenden Ansprüche, **dadurch gekennzeichnet, dass** das erste Rahmenelement (2) eine erste Aufsetzfläche aufweist, auf die ein erster transportierbarer Aufbau (33) aufsetzbar ist.

4. Klapprahmen gemäß einem Anspruch 3, **dadurch gekennzeichnet, dass** die erste Aufsetzfläche mindestens eine erste Laufbahn (15) für den ersten transportierbaren Aufbau (33) aufweist.

5. Klapprahmen gemäß einem der vorstehenden Ansprüche, **dadurch gekennzeichnet, dass** das zweite Rahmenelement (3) eine zweit Aufsetzfläche aufweist, auf die ein zweiter transportierbarer Aufbau (32) aufsetzbar ist.

6. Klapprahmen gemäß einem Anspruch 5, **dadurch gekennzeichnet, dass** die zweite Aufsetzfläche mindestens eine zweite Laufbahn (20) für den zweiten transportierbaren Aufbau (32) aufweist.

7. Klapprahmen gemäß einem der vorstehenden Ansprüche, **dadurch gekennzeichnet, dass** das zweite Rahmenelement (3) eine abklappbare Hakenliftlasche (21) aufweist, die insbesondere an einer der zweiten Aufsetzfläche gegenüberliegenden Unterseite (22) angeordnet ist.

8. Klapprahmen gemäß einem der vorstehenden Ansprüche, **dadurch gekennzeichnet, dass** die Rahmenschwenkachse (4) durch ein Laschen-Drehgelenk (24) festgelegt ist.

9. Klapprahmen gemäß einem der vorstehenden Ansprüche, **gekennzeichnet durch** ein Arretiermittel (29), das die Rahmenelemente (2, 3) in der Transportanordnung arretiert.

10. Klapprahmen gemäß einem der vorstehenden Ansprüche, **gekennzeichnet durch** mindestens eine erste Befestigungslasche (13) am ersten Rahmenelement (2) und/oder mindestens eine zweite Befestigungslasche (18) am zweiten Rahmenelement (3).

11. Mobile Pressenanordnung mit einem Klapprahmen (1) gemäß einem der vorstehenden Ansprüche und mit einer Presse (32) als zweiter transportierbarer Aufbau.

12. Pressenanordnung gemäß Anspruch 11, **dadurch gekennzeichnet, dass** der Klapprahmen (1) in der Aufbauanordnung angeordnet ist, wobei die Presse (32) auf dem zweiten Rahmenelement (3) aufgesetzt ist.

13. Pressenanordnung gemäß Anspruch 11 oder 12, **dadurch gekennzeichnet, dass** die Presse (32) an dem Klapprahmen (1), insbesondere an mindestens einer zweiten Befestigungslasche (18), befestigt ist.

14. Pressenanordnung gemäß einem der Ansprüche 11 bis 13, **gekennzeichnet durch** einen Container (33) als erster transportierbarer Aufbau, wobei der Container (33) insbesondere auf dem ersten Rahmenelement (2) aufgesetzt ist.

15. Pressenanordnung gemäß Anspruch 14, **dadurch gekennzeichnet, dass** der Container (33) an der Presse (32) lösbar befestigbar ist.

## Claims

1. Mobile folding frame for a transport vehicle comprising
a. a first frame element (2),
b. a second frame element (2) hinged to be swiveling to the first frame element (3) about a frame swivel axis (4),
wherein
the folding frame (1) is foldable between a transport arrangement, in which the frame elements (2, 3) are arranged transversely to each other, and a superstructure arrangement, in which the frame elements (2, 3) are arranged parallel to each other,
**characterized in that**
the frame elements (2, 3) in the superstructure arrangement form a common, flat overall surface and are arranged in alignment with one another so that the folding frame (1) has an enlarged overall bearing surface.

2. Folding frame according to claim 1, **characterized in that** the folding frame (1) in the superstructure arrangement is designed as a roll-off container according to DIN 30722.

3. Folding frame according to any one of the preceding claims, **characterized in that** the first frame element (2) has a first bearing surface onto which a first transportable superstructure (33) can be mounted.

4. Folding frame according to claim 3, **characterized in that** the first bearing surface comprises at least a first track (15) for the first transportable superstructure (33).

5. Folding frame according to any one of the preceding claims, **characterized in that** the second frame element (3) has a second bearing surface onto which a second transportable superstructure (32) can be mounted.

6. Folding frame according to claim 5, **characterized in that** the second bearing surface comprises at least one second track (20) for the second transportable superstructure (32).

7. Folding frame according to any one of the preceding claims, **characterized in that** the second frame element (3) has a fold-down hook lift tab (21), which is arranged in particular on an underside (22) opposite the second bearing surface.

8. Folding frame according to any one of the preceding claims, **characterized in that** the frame swivel axis (4) is fixed by a tab swivel joint (24).

9. Folding frame according to any of the preceding claims, **characterized by a** locking means (29) which locks the frame elements (2, 3) in the transport arrangement.

10. Folding frame according to any one of the preceding claims, **characterized by** at least one first fastening tab (13) on the first frame element (2) and/or at least one second fastening tab (18) on the second frame element (3).

11. Mobile press assembly with a folding frame (1) according to any one of the preceding claims and with a press (32) as a second transportable superstructure.

12. Press arrangement according to claim 11, **characterized in that** the folding frame (1) is arranged in the superstructure arrangement, the press (32) being placed on the second frame element (3).

13. Press arrangement according to claim 11 or 12, **characterized in that** the press (32) is fastened to the folding frame (1), in particular to at least one second fastening tab (18).

14. Press arrangement according to any one of claims 11 to 13, **characterized by** a container (33) as a first transportable superstructure, wherein the container (33) is placed in particular on the first frame element (2).

15. Press arrangement according to claim 14, **characterized in that** the container (33) can be detachably attached to the press (32).

## Revendications

1. Cadre pliant mobile pour un véhicule de transport comprenant
a. un premier élément de cadre (2),
b. un deuxième élément de cadre (3) articulé sur le premier élément de cadre (2) de manière à pouvoir pivoter autour d'un axe de pivotement de cadre (4),
dans lequel
ledit cadre pliant (1) peut être plié entre un agencement de transport, dans lequel les éléments de cadre (2, 3) sont disposés transversalement les uns par rapport aux autres, et un agencement de structure, dans lequel les éléments de cadre (2, 3) sont disposés parallèlement les uns par rapport aux autres,
**caractérisé en ce que**
lesdits éléments de cadre (2, 3) forment dans l'agencement de structure une surface globale plane commune et sont disposés en alignement l'un avec l'autre, de sorte que le cadre pliant (1) présente une surface globale d'appui agrandie.

2. Cadre pliant selon la revendication 1, **caractérisé en ce que** le cadre pliant (1) est réalisé dans l'agencement de transport sous forme de conteneur déroulant selon la norme DIN 30722.

3. Cadre pliant selon l'une quelconque des revendications précédentes, **caractérisé en ce que** le premier élément de cadre (2) comprend une première surface d'appui sur laquelle peut être posée une première structure transportable (33).

4. Cadre pliant selon une revendication 3, **caractérisé en ce que** la première surface d'appui comprend au moins un premier chemin de roulement (15) pour la première structure transportable (33).

5. Cadre pliant selon l'une quelconque des revendications précédentes, **caractérisé en ce que** le deuxième élément de cadre (3) présente une deuxième surface d'appui sur laquelle peut être posée une deuxième structure transportable (32).

6. Cadre pliant selon une revendication 5, **caractérisé en ce que** la deuxième surface d'appui présente au moins un deuxième chemin de roulement (20) pour la deuxième structure transportable (32).

7. Cadre pliant selon l'une quelconque des revendications précédentes, **caractérisé en ce que** le deuxième élément de cadre (3) comprend une patte de levage à crochet rabattable (21), qui est notamment disposée sur une face inférieure (22) opposée à la deuxième surface d'appui.

8. Cadre pliant selon l'une quelconque des revendications précédentes, **caractérisé en ce que** l'axe de pivotement du cadre (4) est fixé par une articulation pivotante à pattes (24).

9. Cadre pliant selon l'une quelconque des revendications précédentes, **caractérisé par** un moyen de blocage (29) qui bloque les éléments de cadre (2, 3) dans l'agencement de transport.

10. Cadre pliant selon l'une quelconque des revendications précédentes, **caractérisé par** au moins une première patte de fixation (13) sur le premier élément de cadre (2) et/ou au moins une deuxième patte de fixation (18) sur le deuxième élément de cadre (3).

11. Agencement de pressage mobile comprenant un cadre pliant (1) selon l'une quelconque des revendications précédentes et une presse (32) comme deuxième structure transportable.

12. Agencement de pressage selon la revendication 11, **caractérisé en ce que** le cadre pliant (1) est disposé dans l'agencement de structure, la presse (32) étant placée sur le deuxième élément de cadre (3).

13. Agencement de pressage selon la revendication 11 ou 12, **caractérisé en ce que** la presse (32) est fixée sur le cadre pliant (1), en particulier sur au moins une deuxième patte de fixation (18).

14. Agencement de pressage selon l'une quelconque des revendications 11 à 13, **caractérisé par** un conteneur (33) comme première structure transportable, ledit conteneur (33) étant notamment posé sur le premier élément de cadre (2).

15. Agencement de pressage selon la revendication 14, **caractérisé en ce que** le conteneur (33) peut être fixé de manière amovible sur la presse (32).
